# EUROPEAN PATENT SPECIFICATION

(11) **EP 1 183 825 B1**
(45) Date of publication and mention of the grant of the patent: **16.11.2005**
(21) Application number: 00969332.6
(22) Date of filing: 27.09.2000
(51) Int. Cl.: H04L 12/28, H04L 12/56

(54) **A DISTRIBUTED WIRELESS MEDIUM ACCESS CONTROL PROTOCOL WITH SUPPORT FOR ISOCHRONOUS SERVICES**
VERTEILTES DRAHTLOSES MEDIENZUGRIFFS-KONTROLLPROTOKOLL MIT UNTERSTÜTZUNG VON ISOCHRONEN DIENSTEN
PROTOCOLE DE CONTROLE D'ACCES AU SUPPORT DESTINE A UN RESEAU SANS FIL REPARTI AVEC SUPPORT POUR SERVICES ISOCHRONES

(30) Priority: 05.10.1999 US 413051
(43) Date of publication of application: 06.03.2002
(73) Proprietor: Koninklijke Philips Electronics N.V., 5621 BA Eindhoven (NL)
(72) Inventor: TAN, Narciso, L., NL-5656 AA Eindhoven (NL); BANERJEE, Subrata, NL-5656 AA Eindhoven (NL)
(74) Representative: Cohen, Julius Simon
(86) International application number: PCT/EP2000/009503
(87) International publication number: WO 2001/026292

(56) References cited:
- TZAMALOUKAS A ET AL: "POLL-BEFORE-DATA MULTIPLE ACCESS" 1999 IEEE INTERNATIONAL CONFERENCE ON COMMUNICATIONS. CONFERENCE RECORD. VANCOUVER, CA, JUNE 6 - 10, 1999, IEEE INTERNATIONAL CONFERENCE ON COMMUNICATIONS, NEW YORK, NY: IEEE, US, vol. 2, pages 1207-1211, XP000898048 ISBN: 0-7803-5285-8
- CHENG-SHONG WU ET AL: "DELAY ANALYSIS OF BUFFERED BTMA PROTOCOLS IN MULTIHOP PACKET RADIO NETWORKS" NETWORKING IN THE 90S, BAL HARBOUR, FL, US, APR. 7 - 11, 1991, PROCEEDINGS OF THE ANNUAL JOINT CONFERENCE OF THE COMPUTER AND COMMUNICATIONS SOCIETIES. (INFOCOM), NEW YORK, IEEE, US, vol. 3 , pages 1094-1103, XP000223437 ISBN: 0-87942-694-2

## Description

The invention relates to a method for performing medium access control in a wireless distributed network, the method comprising the step of:
- generating a signal indicating a first node in the network is receiving data from a second node in a predetermined channel.

The invention also relates to a wireless distributed network, comprising a first node in the network arranged to generate a signal indicating the first node is receiving data from a second node in a predetermined channel, and to a node for use in a wireless distributed network comprising the node, the node in the network being arranged to generate a signal indicating the node is receiving data from an other node in a predetermined channel, the network further comprising this other node.

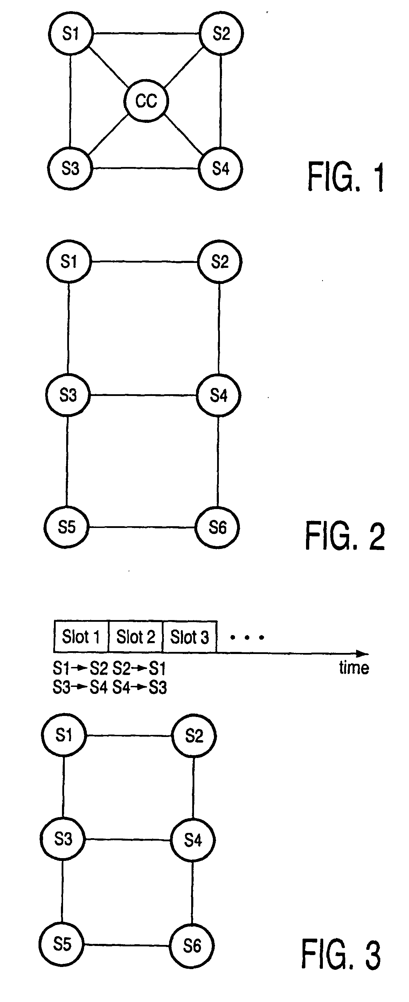

A medium access control (MAC) protocol specifies the method of access to the communication channel by the users. An example of such a protocol for wireless networks is one based on a Central Control Architecture. As shown in Figure 1, this architecture includes a central controller CC and a number of mobile terminals or stations S1-S4. The central controller CC determines when the stations S1-S4 access the communication medium. In cellular systems, the central controller CC is known as a base station.

Even though above-described MAC protocol works well in certain applications, it still has some drawbacks. One drawback is that the channel capacity of the network in most cases is not fully utilised. In the Central Controller Architecture, one station usually can only use the channel at any one time, as can be seen from Figure 1. Although, a communication from S1 to S2 (S1 -> S2) and S3 to S4 (S3 -> S4) can occur simultaneously.

The MAC protocol based on the Central Control Architecture also requires a "Central Controller Selection (CCS)" algorithm. It should be clear that this algorithm affects the total capacity of the wireless network. The capacity of the network depends on whether or not the "best located" CC is selected. Also, if a new CC has to be selected by the "CSS" algorithm every time new station is added to the network, a major portion of the network bandwidth capacity is spent sending and receiving management packets related to this algorithm.

Further, a "Central Controller (CC)- Handoff" procedure is also necessary when a new CC is selected in a number of situations. One such situation arises when the current CC is either turned off or becomes unavailable. Another situation arises when a new station turns on and the CSS algorithm indicates that another station is in a "better location" than the current CC. Further, situations arise when additional CCs are required due to "Hidden stations" requiring a special "go-between" station and a Relay/Bridge station is required when two stations communicating do not belong to the same CC.

Another example of a protocol for wireless networks is one based on a Distributed Architecture. In this architecture, a CC is not required and thus more of the stations in the network can directly communicate. This is desirable since it would enable the communication channel to be more often simultaneously used by more than one station. Further, all of the protocols required to support the central controller architecture such as the "CSS" algorithm are no longer required. Based on these reasons, the Distributed MAC protocol has the potential of providing 33 to 100 percent more capacity or data throughput than a CC-based MAC under some practical scenarios.

However, in the Distributed MAC, a certain amount of the network capacity is used to prevent stations from interfering with each other. However, any "CCS" and "CC-Handoff" algorithms would also require the exchange of related management packets between neighbouring stations over time, and these packets will take away some of the network capacity as well.

The article "Delay Analysis of Buffered BTMA Protocols in Multihop Packet Radio Networks" by Cheng-Shong Wu et al, Networking in the 90s, Bal Harbour, FL, US, Apr 7-11, 1991, Proceedings of the Annual Joint Conference of the Computer and Communications Societies (Infocom), New York, IEEE, US, Vol. 3, pages 1094 - 1103 (XP000223437 - ISBN 0-87942-694) discloses an analysis of a busy tone type multiple access (BTMA) protocol, such as receiver initiated BTMA (RI-BTMA) and conservative BTMA (C-BTMA) protocols. Under these two protocols, the total bandwidth is divided into two separate channels. A data channel is used for transmitting data and a tone channel is used for transmitting a busy tone (page 1095, left-hand column and page 1101, Figure 1). Owing to the fact that a separate channel is used for busy tones only, which busy tones are of the same duration as the data, both protocols are relatively inefficient.

It is an object of the invention, inter alia, to provide a method as defined in the preamble, which is relatively efficient.

Further objects of the invention are, inter alia, to provide a wireless distributed network and a node as defined in the preamble, which are relatively efficient.

Thereto, the method according to the invention further comprises the steps of
- transmitting the signal to one or more other nodes in the predetermined channel, and
- preventing a transmission of data from the one or more other nodes in the predetermined channel if the signal is received.

The wireless distributed network according to the invention is characterized in that the first node is further arranged to transmit the signal to one or more other nodes in the predetermined channel, the network further comprising the one or more other nodes arranged to prevent a transmission of data in the predetermined channel if the signal is received.

The node according to the invention is characterized in that the node is further arranged to transmit the signal to one or more yet other nodes in the predetermined channel, the network further comprising the one or more yet other nodes arranged to prevent a transmission of data in the predetermined channel if the signal is received.

By using the same predetermined channel for the data as well as for the signal, the method and the wireless distributed network and the node all according to the invention are relatively efficient.

The present invention is directed to a MAC protocol for a distributed wireless network that prevents interference among the nodes of the network and increases the chance of simultaneous communication, hence increasing the capacity of the wireless network. The present invention also provides a signaling scheme together with a frame structure that provides a basis for the reservation of time slots and retransmission of errors.

In one situation, a signal is generated to indicate a first node in the network is receiving data from a second node in a predetermined channel. The signal is transmitted to one or more other nodes in the predetermined channel. Further, a data transmission is prevented from the one or more other nodes in the predetermined channel if the signal is received.

In another situation, a signal is generated to indicate a first node in the network is not receiving data from a second node in a predetermined channel. The signal is transmitted to one or more other nodes in the predetermined channel. Further, data is transmitted from the one or more other nodes in the predetermined channel if the signal is received.

Further, the signals indicating a node is receiving data or not can be embodied by an energy burst, a tone or a control packet. Further, the one or more other nodes are one-hop neighbours of the first node. However, the one or more other nodes are not one-hop neighbours of the second node.

Referring now to the drawings where like reference numbers represent corresponding parts throughout:
Figure 1 is a diagram showing a central control architecture network;
Figure 2 is a diagram showing a distributed network;
Figure 3 is a diagram illustrating the operation of a distributed network according to the present invention;
Figure 4 is a diagram showing one embodiment of a frame structure according to the present invention;
Figure 5 is a diagram showing one implementation of a reserve slots channel according to the present invention;
Figures 6A-6B are diagrams illustrating the use of an In-Receive-Mode (IRM) signal according to the present invention;
Figure 7 is a diagram showing another implementation of a reserve slots channel according to the present invention.

The present invention is directed to Medium Access Control (MAC) protocol for Distributed wireless networks. The MAC protocol according to the present invention avoids interference between the mobile terminals or stations included in the network during communication. Therefore, the protocol increases the chance of simultaneous communication between the stations, thereby increasing the capacity of the network.

An example of a Distributed network is shown in Figure 2. As can be seen, this particular network does not include a central controller. As previously described, more of the nodes or mobile stations in the network can directly communicate with each other. This is desirable since it will enable more frequent simultaneous use of the communication channel and thus increase capacity of the network.

As can be seen from Figure 2, the mobile stations S1-S6 are joined by connectivity lines. Each line indicates that the joined stations are one-hop neighbours of each other. In regard to this discussion, the terms neighbour and one-hop neighbour are used interchangeably unless otherwise stated. A one-hop neighbour means that both stations are in the transmission range of each other and thus can hear each other. For example, S2 and S3 are one-hop neighbours of S1, while S4 is not. This means that S2 and S3 can directly transmit and receive with S1, while S4 cannot. Since all of the stations S1-S4 are not one hop neighbours of each other, this means that network in Figure 2 is a multi-hop network.

Still Referring to Figure 2, a number of problems can arise in a multi-hop network. In particular, when S2 is transmitting to S1, S3 cannot hear a transmission from S2. Thus, S2 is said to be a "hidden station" with respect to S3. In this case, S3 would not be able to determine if S1 is in the receive mode by just listening to the channel. Thus, S3 may falsely conclude that it can use the channel to transmit. In order to avoid this problem, S3 must find out if any of its one-hop neighbours, S1 in this case, is in the receive mode.

Another problem arises if S4 transmits data to S3 while S2 is transmitting to S1. If S4 listens to the channel and hears S2's transmission, it may falsely conclude that it cannot transmit to S3. This scenario is known as an "exposed station" problem. Without a Central Controller (CC) to co-ordinate the use of the channel by the different stations, a Distributed MAC must have some mechanism to prevent both the "hidden and exposed station" problems.

For the following discussion it is assumed that the wireless stations are synchronised and a TDM frame structure is employed in a single channel. However, the present invention is not limited to this particular application. Other applications such as FDM, CDM or Hybrids are also contemplated. For these applications, one channel or one slot would be a single frequency band or a single code, respectively.

For any time slot in a TDM channel, collisions of data packets due to the "hidden and exposed station" problem can be avoided if the following rules are implemented in the network:
1. A station can transmit only if none of its one-hop neighbours is in the receive mode during the same time slot;
2. A station can only receive packets if none of its one-hop neighbours is in the transmit mode during the same slot.

Further, it should be noted that it is also possible for a station to have some neighbours in the receive mode and other neighbours in the transmit mode for the same slot. In this situation, the station cannot transmit or receive data in that slot. The above two rules assume the stations know whether or not any of its one-hop neighbours are in the receive mode or transmit mode.

By listening to the channel, a station can find out whether or not any of its neighbours are transmitting in a given slot. However, a station can not determine when another station is in the receive mode by just listening to the channel, unless the receiving station indicates that it is in receive mode explicitly. This is because very often the station in the receive mode is receiving data from a station that is not a one-hop neighbour of the other stations. Therefore, a discovery mechanism to obtain this information is required, which will be described in detail later.

An example of implementing the above-described rules in a distributed network according to the present invention is shown in Figure 3. As can be seen, S1 and S2 are exchanging data. Thus, transmission from S1 to S2 (S1 -> S2) occurs in TDM Slot 1 and transmission from S2 -> S1 occurs in Slot 2, and the rest of the stations are idle. By using the above-described mechanism, S3 and S4 would have the following information. S3 would know that a neighbour is in transmit mode in Slot 1 and a neighbour is in the receive mode in Slot 2. S4 would know that a neighbour is in the receive mode in Slot 1 and a neighbour is in the transmit mode in Slot 2. Based on this information and the two rules listed above, S3 can use Slot 1 to transmit data to S4 and S4 can use Slot 2 to send data to S3.

As mentioned above, the MAC protocol according to the present invention utilises a discovery mechanism to determine whether or not if any of its one-hop neighbours are in the receive mode or transmit mode. This mechanism according to the present includes transmitting a signal to all of its one-hop neighbours indicating that it is in the receive mode. The transmission of this particular signal would be most useful in a situation where most of the stations in the network are not transmitting at once. However, in another situation where most of the stations in the network are transmitting at once, it would be better to transmit a signal to all of a stations one-hop neighbours indicating that it is not in the receive mode.

Further, the transmission of the above-described signal in both situations occurs in predefined positions in time so that other neighbouring stations can monitor these positions and discover the active receivers in the area. This signal sent in the same channel as the data is a significant feature of the present invention since it avoids the use of multiple channels.

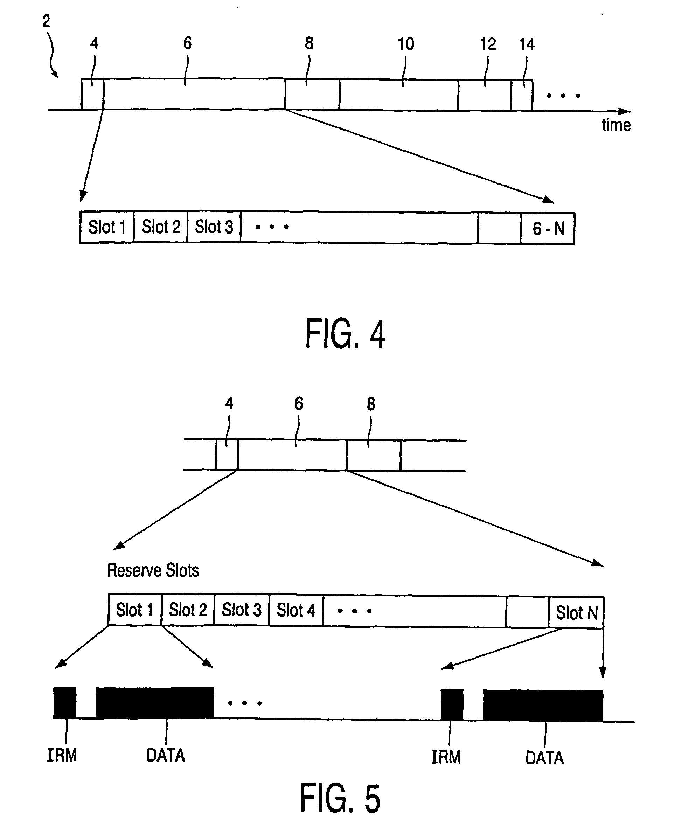

One embodiment of the MAC protocol according to the present invention includes a frame in a single channel, as shown in Figure 4. As can be seen, the frame 2 is divided into five TDM segments. A Network Synchronisation segment 4 is used to synchronise the MAC layer of the stations. This synchronisation mechanism is well known. The Reserve Slots segment 6 has N slots that can be reserved for both isochronous and asynchronous data packets. Priority is given to isochronous packets in case of reservation conflicts. Management and control packets for the Distributed MAC are transmitted in a Management segment 8. An Asynchronous Data segment 10 is used for asynchronous data packets. Isochronous packets initially transmitted in the Reserve Slots segment 6 that require retransmission are transmitted in the Isochronous Retransmission segment 12.

According to the present invention, signals can be transmitted in the reserve slots segment 6 to notify a station that one of its neighbours is in the receive mode. One implementation of a such a reserve slot segment 6 is shown in Figure 5. As can be seen, each reserve slot 1-N is divided into two sub-slots including an In-Receive-Mode (IRM) sub-slot and a Data sub-slot. Whenever a station is in the receive mode for a given slot, it must transmit an IRM signal in the corresponding IRM sub-slot to all of its one hop-neighbours. According to the present invention, the IRM signal could either be an energy burst or just a tone depending on the underlying Physical layer, or a control packet.

Using a tone instead of a control packet as the IRM signal is desirable when the potential data rate is higher. The duration of the IRM sub-slot for a tone can be made smaller than that of an IRM packet because an IRM packet requires additional Physical and MAC layer overheads that a tone does not. Therefore, making the tone-based mechanism more efficient in the higher data rate situation.

On the other hand, utilising a control packet as the IRM signal can be useful since it can be configured to include information about the source (transmitter) and destination (receiver). For example, including the Station-ID of the expected source in the IRM packet can prevent ambiguity and hence packet collisions by allowing only one station to send a packet in the corresponding Data sub-slot. Further, if the IRM packet also includes the expected number of frames a particular station is in the receive mode, a station listening to the channel can anticipate when the slot is going to be free. New nodes that just joined the network can use the information in the IRM packet, as well. These features can also be implemented in an IRM tone system, but would require sending additional management packets in the Management segment. However, if the topology and the traffic are such that frequent collisions of IRM packets occur, then the additional information included in the IRM packet will not be decoded most of the time, and the IRM packets would be equivalent to longer IRM tones.

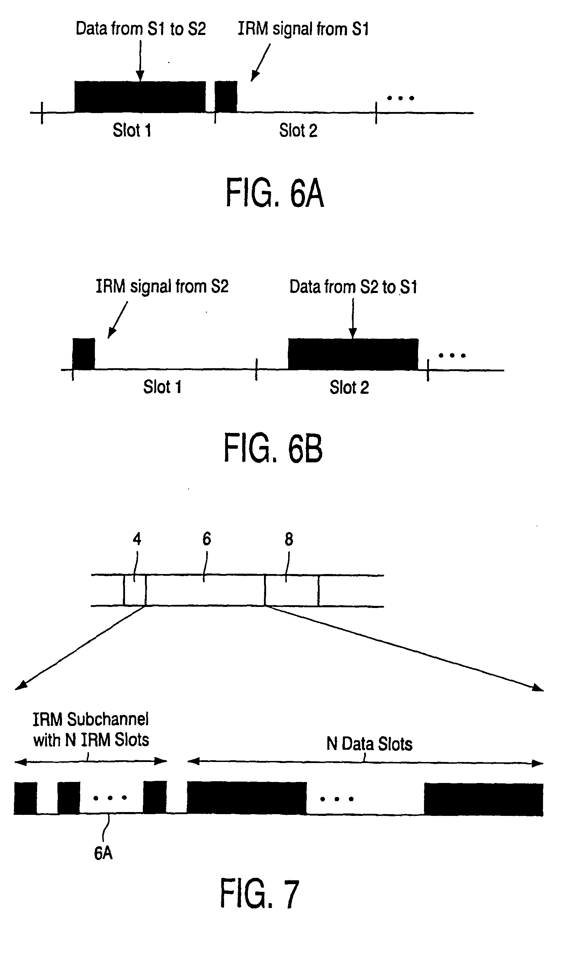

In order to illustrate the use of the IRM signals, consider the situation described in Figure 3 in conjunction with Figures 6A-6B. As previously described, the transmission of S1 -> S2 occurs in Slot 1 of the Reserve Slots segment and the transmission of S2 -> S1 occurs in Slot 2. Further, consider the case where data is sent between S3 and S4. As illustrated in Figure 6A, by monitoring the slots in the Reservation Slots segment, S3 would conclude that it could transmit in Slot 1 but not in Slot 2. This is because S1 is receiving data in slot 2 based on the IRM signal sent from S1 in this slot. As illustrated in Figure 6A, S3 would also conclude that it can receive in Slot 2, but not in Slot 1 since S1 is transmitting in slot 1. Similarly, from Figure 6B, S4 would conclude that it can receive in slot 1 and transmit in slot 2.

Based on the above information along with the two rules described previously, the following is one example of a protocol according to the present invention:
1. S3 monitors the slots and determines that Slot 1 is free for transmission;
2. S4 monitors the slots and determines that it can receive in Slot 1;
3. S3 broadcasts an "S3 request Slot 1 with S4" (Request) packet in the Management segment 8;
4. S4 receives the Request packet;
5. S4 broadcasts "Slot 1 is reserve for S3 and S4"
6. (Confirmation) packet in the Management segment 8;
7. S4 broadcasts an IRM signal in Slot 1 starting with the next frame;
8. S3 receives the Confirmation packet, listens to Slot 1, and starts sending packets to S4 in the Data sub-slot when it detects the IRM signal;

The Request and Confirmation packets broadcast are used as Management packets to inform other stations about the ongoing reservation process so that these stations avoid initiating or completing similar requests for Slot 1. These management packets can be scheduled using a random or a priority-based mechanism in the Management segment 8. Additional management or error recovery packets are required to handle the case when S4 is not available for the slot requested or when a reservation conflict arises.

As an alternative embodiment to the timing structure shown in Figure 5, all the IRM sub-slots can be grouped together to form an IRM sub-segment 6A. Thus, this IRN sub-segment 6A can be placed at the beginning of the Reserve Slots segment 6, as shown in Figure 7. This would be a desirable alternative if control packets are used instead of tones for the IRM signals.

If control packets are used in the timing structure of Figure 5, the duration of the gap between the IRM and Data sub-slots would include the receive-to-transmit turnaround time for the transceivers of the stations involved. However, in the IRM sub-slots of Figure 7, the receive-to- transmit turnaround for the transceivers is not critical and the gap between the IRM packets can be made smaller, hence making this structure more efficient than the previous one. Although, the IRM sub-slot structure is more susceptible to interference because a burst of unfriendly energy in the sub-slot could affect all the subsequent Data sub-slots. This is less likely in the previous timing structure where the IRM sub-slots are distributed over the entire duration of Reserve Slots segment 6 .

If it is assumed that the Management segment 8 is collision free, the stations can monitor request and confirmation packets in the Management segment 8 to keep track of its neighbour's activities such as idle, transmitting, or receiving. Thus, a station will be able to decide if it can send or receive packets based on information stored on the status of its neighbouring stations. This alternate approach may appear to eliminate the need for the IRM signals. However, in order to support seamless integration of new nodes or stations that join the network, this may not be true.

If a new station does join the network, it can quickly determine which neighbours are transmitting. However, a new station may not be able to learn if one or more of its neighbours are in the receive mode in the absence of the IRM signals. On the other hand, sending IRM signals in every time slot will produce more overhead, although, in that case the stations will not be required to store status information of its neighbours.

A compromise between supporting new stations and reducing overhead is to send IRM information in busy time slots every k frames. Thus, out of k frames, a busy time slot will include (k-1) data frames and one (1) frame including both IRM signals and data. A new station joining the network will then be able to determine if any of its neighbours is receiving in a particular time slot as follows:
1. The new station listens to a time slot for k frames;
2. If one of its neighbour is receiving information in that slot and if the corresponding sender is *within* the RF range of the new station, the new station will then hear activity during the IRM part of that time slot in all k frames. However, it should be noted, that in (k-1) frames the activity heard is due to data only and in one frame the activity is due to the IRM signal transmitted by its neighbour in the receive mode;
3. If one of its is neighbour is receiving information in that slot and if the corresponding sender is *beyond* the RF range of the new station, the new node will then hear activity during the IRM part of that time slot in one out of every k frames;
4. If none of its neighbours are in the receive mode, the new station in at least one out of every k frames will then not hear any activity during the IRM part of the time slot;

Also, note that instead of using Management segment 8 for sending "Reserve" and "Confirm" messages, empty time slots in the Reservation Slots segment 6 can be used to exchange these messages. For example, when a node decides that it can transmit in time slot i without interfering with any of its neighbour, it can simply transmit a "Reserve" message containing its own and a destination node's id in time slot i. If there is no activity near the destination node in time slot i, the destination station then can send a "Confirm" message. If two stations try to send a "Reserve" message in the same time slot, the two messages may collide and will back off for a random duration. In the next attempt, the two stations may randomly select different time slots if available. Note that, if a neighbour (say Station A) of the destination is receiving in slot i, the destination station may not be able to send the "Confirm" message immediately. In this case, the destination station can send the "Confirm" message during the frame when Station A is transmitting the IRM signal.

Since the transmissions in the Reserve Slots segment 6 are reservation-based, the receivers sending the IRM signals expect to receive a data packet during the corresponding Data sub-slot. If the receiver was not able to receive any packet or was unable to decode the received packet correctly, it can send a negative acknowledgement packet (NAK) to the expected transmitter in the Management segment. On receiving this NAK, the transmitter can then schedule a retransmission of the packet in the Isochronous Retransmission segment in the same frame. The schedule of transmissions in the Isochronous Retransmission segment may be random or priority-based.

The foregoing description of the invention have been presented for the purposes of illustration and description. It is not intended to limit the invention to the precise forms disclosed. Many modifications and variations are possible in light of the above teachings. Therefore, it is not intended that the scope of the invention should be limited by the detail description.

## Claims

1. A method for performing medium access control in a wireless distributed network, the method comprising the step of:
- generating a signal indicating a first node (S1) in the network is receiving data from a second node (S2) in a predetermined channel,
**characterized in that** the method further comprises the steps of
- transmitting the signal to one or more other nodes (S3) in the predetermined channel, and
- preventing a transmission of data from the one or more other nodes (S3) in the predetermined channel if the signal is received.

2. The method of claim 1, **characterized in that** the predetermined channel is divided into time slots, whereby a node (S1-S6) can transmit only if none of its one-hop neighbours is in a receive mode during the same time slot and a node (S1-S6) can receive only if none of its one-hop neighbours is in a transmit mode during the same time slot.

3. The method of claim 2, **characterized in that** each time slot comprises a first sub-slot and a second sub-slot, wherein the signal is transmitted in the first sub-slot and the data is transmitted in the second sub-slot.

4. The method of claim 1, **characterized in that** the predetermined channel is divided into a plurality of time segments, wherein the signal is transmitted in one of the time segments and the data is transmitted in remaining time segments.

5. The method of claim 1, **characterized in that** the signal is transmitted to all one-hop neighbours (S2,S3) of the first node (S1) in a situation where most of the nodes in the network are not transmitting at once.

6. The method of claim 1, **characterized in that** the method further comprises the steps of:
- generating a further signal indicating the first node (S1) in the network is not receiving data from the second node (S2) in the predetermined channel,
- transmitting the further signal to one or more other nodes (S3) in the predetermined channel, and
- transmitting data from the one or more other nodes (S3) in the predetermined channel if the further signal is received.

7. The method of claim 6, **characterized in that** the further signal is transmitted to all one-hop neighbours (S2,S3) of the first node (S1) in a further situation where most of the nodes in the network are transmitting at once.

8. A wireless distributed network, comprising a first node (S1) in the network arranged to generate a signal indicating the first node (S1) is receiving data from a second node (S2) in a predetermined channel, **characterized in that** the first node (S1) is further arranged to transmit the signal to one or more other nodes (S3) in the predetermined channel, the network further comprising the one or more other nodes (S3) arranged to prevent a transmission of data in the predetermined channel if the signal is received.

9. The wireless distributed network of claim 8, **characterized in that** the predetermined channel is divided into time slots, whereby a node (S1-S6) is arranged to transmit only if none of its one-hop neighbours is in a receive mode during the same time slot and a node (S1-S6) is arranged to receive only if none of its one-hop neighbours is in a transmit mode during the same time slot.

10. The wireless distributed network of claim 9, **characterized in that** each time slot comprises a first sub-slot and a second sub-slot, wherein the first node (S1) is further arranged to transmit the signal in the first sub-slot and the one or more other nodes (S3) are further arranged to transmit the data in the second sub-slot.

11. The wireless distributed network of claim 8, **characterized in that** the predetermined channel is divided into a plurality of time segments, wherein the first node (S1) is further arranged to transmit the signal in one of the time segments and the one or more other nodes (S3) are further arranged to transmit the data in remaining time segments.

12. The wireless distributed network of claim 8, **characterized in that** the first node (S1) is further arranged to transmit the signal to all of its one-hop neighbours (S2,S3) in a situation where most of the nodes in the network are not transmitting at once.

13. The wireless distributed network of claim 8, **characterized in that** the first node (S1) is further arranged to generate a further signal indicating the first node (S1) in the network is not receiving data from the second node (S2) in the predetermined channel and is further arranged to transmit the further signal to one or more other nodes (S3) in the predetermined channel, the one or more other nodes (S3) being further arranged to transmit data in the predetermined channel if the further signal is received.

14. The wireless distributed network of claim 13, **characterized in that** the first node (S1) is further arranged to transmit the further signal to all of its one-hop neighbours (S2,S3) in a further situation where most of the nodes in the network are transmitting at once.

15. A node (S1) for use in a wireless distributed network comprising the node (S1), the node (S1) in the network being arranged to generate a signal indicating the node (S1) is receiving data from an other node (S2) in a predetermined channel, the network further comprising this other node (S2), **characterized in that** the node (S1) comprises means to transmit the signal to one or more yet other nodes (S3) in the predetermined channel, to prevent said one or more yet other nodes receiving said signal to transmit data in the predetermined channel.

16. The node (S1) of claim 15, **characterized in that** the predetermined channel is divided into time slots, whereby the node (S1) is arranged to transmit only if none of its one-hop neighbours is in a receive mode during the same time slot and the node (S1) is arranged to receive only if none of its one-hop neighbours is in a transmit mode during the same time slot.

## Patentansprüche

1. Verfahren zum Durchführen von Medienzugriffssteuerung in einem drahtlosen verteilten Netzwerk, wobei das Verfahren den nachfolgenden Verfahrensschritt umfasst:
- das Erzeugen eines Signals, das angibt, dass ein erster Knotenpunkt (S1) in dem Netzwerk Daten von einem zweiten Knotenpunkt (S2) über einen vorbestimmten Kanal empfängt, **dadurch gekennzeichnet, dass** das Verfahren weiterhin die nachfolgenden Verfahrensschritte umfasst:
- das Übertragen des Signals zu einem oder mehreren anderen Knotenpunkten (S3) über den vorbestimmten Kanal, und
- das Vermeiden einer Übertragung von Daten von dem einen Knotenpunkt oder von mehreren Knotenpunkten (S3) über den vorbestimmten Kanal, wenn das Signal empfangen wird.

2. Verfahren nach Anspruch 1, **dadurch gekennzeichnet, dass** der vorbestimmte Kanal in Zeitschlitze aufgeteilt ist, wobei ein Knotenpunkt (S1-S6) nur dann übertragen kann, wenn keiner von den one-hop-Nachbarn während desselben Zeitschlitzes sich in einer Empfangsmode befindet und ein Knotenpunkt (S1-S6) nur dann empfangen kann, wenn keiner der one-hop-Nachbarn sich während desselben Zeitschlitzes in einer Übertragungsmode befindet.

3. Verfahren nach Anspruch 2, **dadurch gekennzeichnet, dass** jeder Zeitschlitz einen ersten Subschlitz und einen zweiten Subschlitz enthält, wobei das Signal in dem ersten Subschlitz übertragen wird und wobei die Daten in dem zweiten Subschlitz übertragen werden.

4. Verfahren nach Anspruch 1, **dadurch gekennzeichnet, dass** der vorbestimmte Kanal in eine Anzahl Zeitsegmente aufgeteilt wird, wobei das Signal in einem der Zeitsegmente übertragen wird und die Daten in restlichen Zeitsegmenten übertragen werden.

5. Verfahren nach Anspruch 1, **dadurch gekennzeichnet, dass** das Signal allen one-hop-Nachbarn (S2, S3) des ersten Knotenpunktes (S1) in einer Situation zugeführt wird, in der die meisten Knotenpunkte in dem Netzwerk nicht gleichzeitig übertragen.

6. Verfahren nach Anspruch 1, **dadurch gekennzeichnet, dass** das Verfahren weiterhin die nachfolgenden Verfahrensschritte umfasst:
- das Erzeugen eines weiteren Signals, das angibt, dass der erste Knotenpunkt (S1) in dem Netzwerk nicht Daten von dem zweiten Knotenpunkt (S2) über den vorbestimmten Kanal empfängt,
- das Übertragen des weiteren Signals zu einem oder mehreren anderen Knotenpunkten (S3) über den vorbestimmten Kanal, und
- das Übertragen von Daten von dem einen Knotenpunkt oder von mehreren anderen Knotenpunkten (S3) über den vorbestimmten Kanal, wenn das weitere Signal empfangen wird.

7. Verfahren nach Anspruch 6, **dadurch gekennzeichnet, dass** das weitere Signal allen one-hop-Nachbarn (S2, S3) des ersten Knotenpunktes (S1) übertragen wird, und zwar in einer weiteren Situation, in der die meisten der Knotenpunkte in dem Netzwerk nicht gleichzeitig übertragen.

8. Drahtloses verteiltes Netzwerk mit einem ersten Knotenpunkt (S1) in dem Netzwerk, vorgesehen zum Erzeugen eines Signals, das angibt, dass der erste Knotenpunkt (S1) Daten von einem zweiten Knotenpunkt (S2) über einen vorbestimmten Kanal empfängt, **dadurch gekennzeichnet, dass** der erste Knotenpunkt (S1) weiterhin vorgesehen ist zum Übertragen des Signals zu einem oder mehreren Knotenpunkten (S3) über den vorbestimmten Kanal, wobei das Netzwerk weiterhin den einen Knotenpunkt (S3) oder mehrere Knotenpunkte aufweist, vorgesehen um eine Übertragung von Daten über den vorbestimmten Kanal zu vermeiden, wenn das Signal empfangen wird.

9. Drahtloses verteiltes Netzwerk nach Anspruch 8, **dadurch gekennzeichnet, dass** der vorbestimmte Kanal in Zeitschlitze aufgeteilt ist, wobei ein Knotenpunkt (S1-S6) dazu vorgesehen ist, nur dann zu übertragen, wenn keiner der one-hop-Nachbarn sich während desselben Zeitschlitzes in einer Empfangsmode befindet und ein Knotenpunkt (S1-S6) vorgesehen ist um nur dann zu empfangen, wenn keiner der one-hop-Nachbarn sich während desselben Zeitschlitzes in einer Übertragungsmode befindet.

10. Drahtloses verteiltes Netzwerk nach Anspruch 9, **dadurch gekennzeichnet, dass** jeder Zeitschlitz einen ersten Subschlitz und einen zweiten Subschlitz enthält, wobei der erste Knotenpunkt (S1) weiterhin dazu vorgesehen ist, das Signal in dem ersten Subschlitz zu übertragen und der eine Knotenpunkt (S3) oder mehrere Knotenpunkte weiterhin dazu vorgesehen sind, die Daten in dem zweiten Subschlitz zu übertragen.

11. Drahtloses verteiltes Netzwerk nach Anspruch 8, **dadurch gekennzeichnet, dass** der vorbestimmte Kanal in eine Anzahl Zeitsegmente aufgeteilt ist, wobei der erste Knotenpunkt (S1) weiterhin dazu vorgesehen ist, das Signal in einem der Zeitsegmente zu übertragen und der andere Knotenpunkt (S3) oder die anderen Knotenpunkte weiterhin dazu vorgesehen ist bzw. sind, die Daten in restlichen Zeitsegmenten zu übertragen.

12. Drahtloses verteiltes Netzwerk nach Anspruch 8, **dadurch gekennzeichnet, dass** der erste Knotenpunkt (S1) weiterhin dazu vorgesehen ist, das Signal allen one-hop-Nachbarn (S2, S3) zu übertragen, und zwar in einer Situation, in der die meisten Knotenpunkte in dem Netzwerk nicht gleichzeitig übertragen.

13. Drahtloses verteiltes Netzwerk nach Anspruch 8, **dadurch gekennzeichnet, dass** der erste Knotenpunkt (S1) weiterhin dazu vorgesehen ist, ein weiteres Signal zu erzeugen, das angibt, dass der erste Knotenpunkt (S1) in dem Netzwerk nicht Daten von dem zweiten Knotenpunkt (S2) in dem vorbestimmten Netzwerk empfängt, und weiterhin dazu vorgesehen ist, das weitere Signal einem anderen Knotenpunkt (S3) oder mehreren anderen Knotenpunkten (S3) über den vorbestimmten Kanal zu übertragen, wobei der eine andere Knotenpunkt oder mehrere andere Knotenpunkte weiterhin dazu vorgesehen ist bzw. sind, Daten über den vorbestimmten Kanal zu übertragen, wenn das weitere Signal empfangen wird.

14. Drahtloses verteiltes Netzwerk nach Anspruch 13, **dadurch gekennzeichnet, dass** der erste Knotenpunkt (S1) weiterhin dazu vorgesehen ist, das weitere Signal allen one-hop-Nachbarn (S2, S3) in einer weiteren Situation zu übertragen, in der die meisten Knotenpunkte in dem Netzwerk gleichzeitig übertragen.

15. Knotenpunkt (S1) zur Verwendung in einem drahtlosen verteilten Netzwerk mit dem Knotenpunkt (S1), wobei der Knotenpunkt (S1) in dem Netzwerk dazu vorgesehen ist, ein Signal zu erzeugen, das angibt, dass der Knotenpunkt (S1) Daten von einem anderen Knotenpunkt (S2) über einen vorbestimmten Kanal empfängt, wobei das Netzwerk weiterhin diesen anderen Knotenpunkt (S2) enthält, **dadurch gekennzeichnet, dass** der Knotenpunkt (S1) Mittel aufweist um zu vermeiden, dass ein noch anderer oder mehrere noch andere Knotenpunkte das genannte Signal empfängt bzw. empfangen um Daten über den vorbestimmten Kanal zu übertragen.

16. Knotenpunkt (S1) nach Anspruch 15, **dadurch gekennzeichnet, dass** der vorbestimmte Kanal in Zeitschlitze aufgeteilt ist, wobei der Knotenpunkt (S1) dazu vorgesehen ist, nur dann zu übertragen, wenn keiner der one-hop-Nachbarn sich während desselben Zeitschlitzes in einer Empfangsmode befindet und der Knotenpunkt (S1) dazu vorgesehen ist, nur dann zu empfangen, wenn keiner der one-hop-Nachbarn sich während desselben Zeitschlitzes in einer Übertragungsmode befindet.

## Revendications

1. Procédé destiné à exécuter un contrôle d'accès au support dans un réseau sans fil réparti, le procédé comprenant l'étape suivante :
- générer un signal indiquant qu'un premier noeud (S1) dans le réseau est en train de recevoir des données provenant d'un deuxième noeud (S2) sur une voie prédéterminée, **caractérisé en ce que** le procédé comprend en outre les étapes suivantes :
- transmettre le signal à un ou plusieurs autres noeuds (S3) sur la voie prédéterminée, et
- empêcher une transmission de données provenant du ou des autres noeuds (S3) sur la voie prédéterminée si le signal est reçu.

2. Procédé suivant la revendication 1, **caractérisé en ce que** la voie prédéterminée est divisée en intervalles de temps, en sachant qu'un noeud (S1-S6) ne peut transmettre que si aucun de ses voisins distants d'un seul saut ne se trouve dans un mode de réception durant le même intervalle de temps, et qu'un noeud (S1-S6) ne peut recevoir que si aucun de ses voisins distants d'un seul saut ne se trouve dans un mode de transmission durant le même intervalle de temps.

3. Procédé suivant la revendication 2, **caractérisé en ce que** chaque intervalle de temps comprend un premier sous-intervalle de temps et un second sous-intervalle de temps, le signal étant transmis dans le premier sous-intervalle et les données étant transmises dans le second sous-intervalle.

4. Procédé suivant la revendication 1, **caractérisé en ce que** la voie prédéterminée est divisée en une pluralité de segments temporels, le signal étant transmis dans l'un des segments temporels et les données étant transmises dans les segments temporels restants.

5. Procédé suivant la revendication 1, **caractérisé en ce que** le signal est transmis à tous les voisins distants d'un seul saut (S2, S3) du premier noeud (S1) dans une situation où la plupart des noeuds dans le réseau ne transmettent pas immédiatement.

6. Procédé suivant la revendication 1, **caractérisé en ce que** le procédé comprend en outre les étapes suivantes :
- générer un signal supplémentaire indiquant que le premier noeud (S1) dans le réseau n'est pas en train de recevoir des données provenant du deuxième noeud (S2) sur la voie prédéterminée;
- transmettre le signal supplémentaire à un ou plusieurs autres noeuds (S3) sur la voie prédéterminée, et
- transmettre les données provenant du ou des autres noeuds (S3) sur la voie prédéterminée si le signal supplémentaire est reçu.

7. Procédé suivant la revendication 6, **caractérisé en ce que** le signal supplémentaire est transmis à tous les voisins distants d'un seul saut (S2, S3) du premier noeud (S1) dans une situation supplémentaire où la plupart des noeuds dans le réseau transmettent immédiatement.

8. Réseau sans fil réparti, comprenant un premier noeud (S1) dans le réseau apte à générer un signal indiquant que le premier noeud (S1) est en train de recevoir des données provenant d'un deuxième noeud (S2) sur une voie prédéterminée, **caractérisé en ce que** le premier noeud (S1) est en outre apte à transmettre le signal à un ou plusieurs autres noeuds (S3) sur la voie prédéterminée, le réseau comprenant en outre le ou les autres noeuds (S3) aptes à empêcher une transmission de données sur la voie prédéterminée si le signal est reçu.

9. Réseau sans fil réparti suivant la revendication 8, **caractérisé en ce que** la voie prédéterminée est divisée en intervalles de temps, en sachant qu'un noeud (S1-S6) est apte à émettre uniquement si aucun de ses voisins distants d'un seul saut ne se trouve dans le mode de réception durant le même intervalle de temps, et qu'un noeud (S1-S6) est apte à recevoir uniquement si aucun de ses voisins distants d'un seul saut ne se trouve dans un mode de transmission durant le même intervalle de temps.

10. Réseau sans fil réparti suivant la revendication 9, **caractérisé en ce que** chaque intervalle de temps comprend un premier sous-intervalle et un second sous-intervalle, le premier noeud (S1) étant en outre apte à transmettre le signal dans le premier sous-intervalle, et le ou les autres noeuds (S3) étant en outre aptes à transmettre les données dans le second sous-intervalle.

11. Réseau sans fil réparti suivant la revendication 8, **caractérisé en ce que** la voie prédéterminée est divisée en une pluralité de segments temporels, le premier noeud (S1) étant en outre apte à transmettre le signal dans un des segments temporels, et le ou les autres noeuds (S3) étant en outre aptes à transmettre les données dans des segments temporels restants.

12. Réseau sans fil réparti suivant la revendication 8, **caractérisé en ce que** le premier noeud (S1) est en outre apte à transmettre le signal à tous ses voisins distants d'un seul saut (S2, S3) dans une situation où la plupart des noeuds dans le réseau n'émettent pas en même temps.

13. Réseau sans fil réparti suivant la revendication 8, **caractérisé en ce que** le premier noeud (S1) est en outre apte à générer un signal supplémentaire indiquant que le premier noeud (S1) dans le réseau n'est pas en train de recevoir des données provenant du deuxième noeud (S2) sur la voie prédéterminée, et est en outre apte à transmettre le signal supplémentaire à un ou plusieurs autres noeuds (S3) sur la voie prédéterminée, le ou les autres noeuds (S3) étant en outre aptes à transmettre des données sur la voie prédéterminée si le signal supplémentaire est reçu.

14. Réseau sans fil réparti suivant la revendication 13, **caractérisé en ce que** le premier noeud (S1) est en outre apte à transmettre le signal supplémentaire à tous ses voisins distants d'un seul saut (S2, S3) dans une situation supplémentaire où la plupart des noeuds dans le réseau émettent immédiatement.

15. Noeud (S1) à utiliser dans un réseau sans fil réparti comprenant le noeud (S1), le noeud (S1) dans le réseau étant apte à générer un signal indiquant que le noeud (S1) est en train de recevoir des données provenant d'un autre noeud (S2) sur une voie prédéterminée, le réseau comprenant en outre cet autre noeud (S2), **caractérisé en ce que** le noeud (S1) comprend des moyens pour transmettre le signal à un ou plusieurs autres noeuds (S3) encore sur la voie prédéterminée pour empêcher lesdits un ou plusieurs autres noeuds encore recevant ledit signal de transmettre des données sur la voie prédéterminée.

16. Noeud (S1) suivant la revendication 15, **caractérisé en ce que** la voie prédéterminée est divisée en intervalles de temps, en sachant que le noeud (S1-S6) est apte à transmettre uniquement si aucun de ses voisins distants d'un seul saut ne se trouve dans le mode de réception durant le même intervalle de temps, et que le noeud (S1) est apte à recevoir uniquement si aucun de ses voisins distants d'un seul saut ne se trouve dans un mode de transmission durant le même intervalle de temps.
